# EUROPEAN PATENT APPLICATION

(11) **EP 2 426 587 A2**
(43) Date of publication of application: **07.03.2012**
(21) Application number: 11178645.5
(22) Date of filing: 24.08.2011
(51) Int. Cl.: G06F 3/048, H04N 21/431, H04N 21/482, H04N 21/475, H04N 21/485

(54) **Method for providing channel list and display apparatus applying the same**

(30) Priority: 02.09.2010 KR 20100086110
(71) Applicant: SAMSUNG ELECTRONICS CO., LTD., Suwon-si Gyeonggi-do 442-742 (KR)
(72) Inventor: Moon, J-bum, Seoul (KR); Kwon, Heui-jin, Gyeonggi-do (KR); Choi, Yoo-jin, Seoul (KR); Hwang, Woo-seok, Seoul (KR)
(74) Representative: Fearnside, Andrew Simon

(57) **Abstract**

A for providing channel list generates a plurality of channel lists including a plurality of channels, the channel lists aligned by a plurality of alignment standards, and displays the plurality of channel lists on a screen. When one of the plurality of channels is selected from one of the plurality of channel lists, the selected channel is displayed. Accordingly, a user becomes able to easily compare various channels that the user wishes to view through the plurality of channel lists aligned by each alignment standard, providing convenience in selecting TV programs by the user.

## Description

### CROSS-REFERENCE TO RELATED APPLICATION

This application claims priority from Korean Patent Application No. 2010-86110, filed in the Korean Intellectual Property Office on September 2, 2010, the disclosure of which is incorporated herein by reference in its entirety.

### BACKGROUND

### 1. Field of the Exemplary Embodiments

Apparatuses consistent with exemplary embodiments relate to a method for providing channel list and display apparatus applying the same, and more specifically, though not exclusively a method for providing channel list for selecting a broadcast program transmitted from a broadcasting station and display apparatus applying the same.

### 2. Description of the Prior Art

As not only public television (TV) broadcasting stations but also numerous cable broadcasting stations and satellite broadcasting stations are being established, the number of channels that a TV can provide is increasing geometrically. In the past, there were only about dozens of channels, but nowadays, hundreds of channels are provided by a TV. That is, there are so many channels in a TV that users cannot remember all the channels.

In addition, a user may zap, i.e., change, channels to see a particular program of a particular broadcasting station, but in many cases the user zaps channels to find an interesting program, but not to view a program of a particular broadcasting station. That is, the user oftentimes wishes to merely "surf" the channels without remaining at one channel to view an entire program.

In the past, ways to zap a channel of among numerous channels included directly changing channels one by one and checking each channel to select one channel, generating a channel list to see program names to select one channel, and watching a simultaneous broadcast such as one on a PIP screen and changing channels to select one channel.

However, these methods had a problem of having to depend on user's memory regarding the information on the channels, for example, the image which is currently being displayed on the channels, and that only a limited number of channels could be compared.

Accordingly, there is a need to seek a method wherein a user can generate channel lists according to a standard selected by the user and compare the plurality of channels.

### SUMMARY

According to the present invention there is provided an apparatus and method as set forth in the appended claims. Other features of the invention will be apparent from the dependent claims, and the description which follows.

An aspect of an exemplary embodiment provides a method for providing channel lists, the method comprising generating a plurality of channel lists aligned by each alignment standard and displaying the plurality of channel lists on one screen, and a display apparatus applying the same.

An aspect of an exemplary embodiment provides a method for providing channel list may include generating a plurality of channel lists aligned by each alignment standard; displaying the plurality of channel lists on a screen; and when a channel is selected from a channel list of the plurality of channel lists, seeking the selected channel, and displaying the sought selected channel.

The channel lists may include at least one channel information of channel number, channel name, thumbnail image, program title and program broadcasting time.

The alignment standard may be one of channel number, genre, recently viewed order, preference, channel name, broadcasting time, caption language, source resolution, program rating, reservation information and tag information.

The method for providing channel list may further include editing the plurality of channel lists displayed; wherein the editing is at least one of changing a location of the channel lists, deleting the channel lists, inserting the channel lists, changing the form of the channel lists, and changing the alignment standard of the channel lists.

At least one of the plurality of the channel lists may be displayed as a scroll list comprising a channel information display area and a channel image aligned by the channel information display area standard, the scroll list is scrolled according to a user selection, and displays channel information corresponding to the previous or the next channel image on the channel information display area, and a size of the channel image becomes smaller in proportion to the distance from the channel information display area.

A same channel may be included in at least two channel lists of the plurality of channel lists.

The at least two channel lists of the plurality of channel lists may be aligned by the same alignment standard.

The channel lists aligned by the same alignment standard may have divided channel search sections.

The channel lists aligned by the same alignment standard may have different channel search starting points.

The displaying the plurality of channel lists may overlap the plurality of channel lists and displays the plurality of channel lists in the state of displaying an image which is currently viewed.

An aspect of an exemplary embodiment provides a display apparatus may include a display unit; and a controlling unit which generates a plurality of channel lists aligned by each alignment standard, displays the plurality of channel lists through the display unit, and when a channel is selected from one channel list of the plurality of channel lists seeks the selected channel and displays the sought selected channel.

The channel lists may include at least one channel information of channel number, channel name, thumbnail image, program title and program broadcasting time.

The alignment standard may be one of channel number, genre, recently viewed order, preference, channel name, broadcasting time zone, caption language, source resolution, program rating, reservation information and tag information.

The controlling unit may control so that the location of the channel lists is changed, the channel lists are deleted, the channel lists are inserted, the form of the channel lists is changed, and the alignment standard of the channel lists is changed.

At least one of the plurality of channel lists may be displayed as a scroll list comprising a channel information display area and a channel image aligned by the channel information display area standard, the scroll list is scrolled according to a user selection, displays channel information corresponding to the previous or the next channel image on the channel information display area, and a size of the channel image becomes smaller in proportion to a distance from the channel information display area.

A same channel may be included in at least two channel lists of the plurality of channel lists.

The at least two channel lists of the plurality of channel lists may be aligned by the same alignment standard.

The channel lists aligned by the same alignment standard may have divided channel search sections.

The channel lists aligned by the same alignment standard may have different channel search starting points.

The controlling unit may control so that the plurality of channel lists are overlapped and displayed in the stated of displaying the image which is currently viewed.

An aspect of an exemplary embodiment provides a method for providing a plurality of channels, the method including generating a plurality of channel lists comprising a plurality of channels, the plurality of channel grouped into the plurality of channel lists based on a characteristic of the channels; displaying the plurality of channel lists on a screen; highlighting at least one of the plurality of channels in at least one of the plurality of channel lists, the one channel list being scrollable; receiving a user input; and scrolling to another one of the plurality of channels in the one channel list.

The plurality of channel lists may each be scrollable.

The plurality of channel lists may be disposed next to one another along one direction and the channel lists may be scrollable in another direction substantially perpendicular to the one direction.

An entire channel image of the highlighted one of the channels is displayed on the screen, and at least a portion of other channels of the plurality of channels are displayed on the screen.

### BRIEF DESCRIPTION OF THE DRAWINGS

FIG. 1 is a block diagram illustrating a detailed configuration of a TV according to an exemplary embodiment,

FIG. 2 is a flow chart illustrating a method for providing channel lists according to an exemplary embodiment,

FIG. 3 illustrates a screen having a plurality of channel lists according to an exemplary embodiment,

FIG. 4 illustrates a screen having a plurality of channel lists aligned by a same alignment standard according to an exemplary embodiment,

FIGS. 5a and 5b illustrate another screen having a plurality of channel lists aligned by a same alignment standard according to another exemplary embodiment,

FIG. 6 illustrates a plurality of channel lists which are overlapped on a screen which is being viewed and displayed thereon according to an exemplary embodiment, and

FIGS. 7a and 7b illustrate a screen having a plurality of contents lists according to an exemplary embodiment.

### DETAILED DESCRIPTION OF THE EXEMPLARY EMBODIMENTS

Certain exemplary embodiments are described in greater detail with reference to the accompanying drawings. Expressions such as "at least one of," when preceding a list of elements, modify the entire list and not the individual elements of the list.

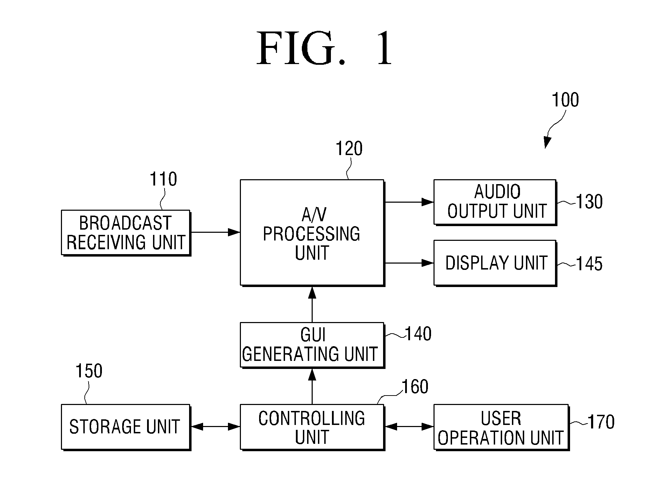

FIG. 1 illustrates a block diagram of a TV 100 according to an exemplary embodiment. As illustrated in FIG. 1, the TV 100 includes a broadcast receiving unit 110, an A/V processing unit 120, an audio output unit 130, a GUI generating unit 140, a display unit 145, a storage unit 150, a controlling unit 160, and a user operation unit 170.

The broadcast receiving unit 110 receives a broadcast from a broadcasting station or a satellite wired or wirelessly and demodulates the received broadcast.

The audio/video (A/V) processing unit 120 performs signal processing such as video decoding, video scaling, and audio decoding on an image signal and an audio signal input from the broadcast receiving unit 110. In addition, the A/V processing unit 120 outputs the image signal to the display unit 145, and outputs the audio signal to the audio output unit 130.

On the other hand, in the case of storing the received image and audio signals in the storage unit 150, the A/V processing unit 120 stores the image and the audio signals in the storage unit 150 in a compressed form.

The audio output unit 130 outputs the audio output from the A/V processing unit 120 to a speaker or to an audio output terminal to which an external speaker is connected (not shown).

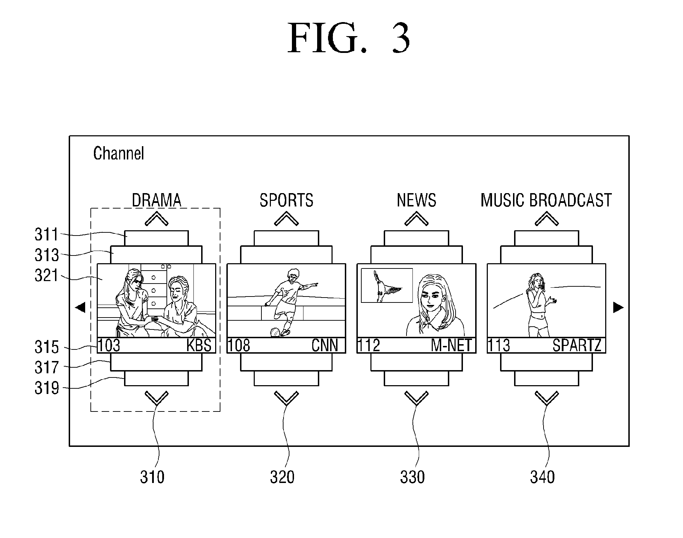

The GUI generating unit 140 generates a graphic user interface (GUI) to be provided to the user. The GUI generated in the GUI generating unit 140 may be displayed on the screen in the form of an on screen display (OSD) menu. More specifically, the GUI generating unit 140 generates a plurality of channel lists having a plurality of channels as illustrated in FIGS. 3 to 7b.

As illustrated in FIGS. 3 to 7b, the plurality of channel lists are displayed as a plurality of scroll lists which each include a channel information display area and a highlighted channel image which is aligned on left-right or top-bottom of the channel information display area. The plurality of channel lists also include a plurality of portions of a plurality of non-highlighted channel images. For example, one of the plurality of channels in one of the channel lists is highlighted and the full channel image and channel information are displayed, while the others of the plurality of channels in the one channel list are not highlighted and only a portion of the channel images are displayed.

Herein, the scroll lists are scrolled according to a user selection, displaying the channel information corresponding to the previous or the next channel image on the channel information display area based on the user selection. A size of the channel image of a channel may become smaller in proportion to the distance from the channel information display area. The plurality of channel lists generated will be explained in greater detail hereinafter with reference to FIGS. 3 to 7b.

The display unit 145 displays the image output from the A/V processing unit 120. In addition, the display unit 145 displays an image where the GUI generated in the GUI generating unit 140 is included in the form of an OSD.

The storage unit 150 records multimedia contents received from the broadcast receiving unit 110 and stores it. In addition, in the case of an internet protocol television (IPTV), the storage unit 150 may store the multimedia contents file received through a network interface (not illustrated).

Furthermore, the storage unit 150 may store a plurality of channel lists. Herein, the channel lists refer to the channel lists aligned, or grouped, by a particular alignment standard, and the particular alignment standard may be set by the user or set automatically. Herein, the channel lists include at least one channel information of the plurality of channels. The channel information may include one or more of, for example, channel number, channel name, thumbnail image, program title and program broadcasting time. In addition, the alignment standard of the channel lists may be one of channel number, genre, recently viewed order, preference, channel name, broadcasting time zone, caption language, source resolution, program rating, reservation information and tag information.

As above-mentioned, the storage unit 150 may be embodied as a hard disk or a non-volatile memory.

The user operation unit 170 receives an input of a user's operation and transmits the user's operation to the controlling unit 160. More specifically, the user operation unit 170 receives the user's input of a channel list set command and a channel set command. The user operation unit 170 may be embodied as an input device wherein four-direction input is possible, for example, a button, a touch screen, a remote control, or a motion capture disposed on the TV 100.

The controlling unit 160 analyzes the user command based on the contents of the user operation transmitted from the user operation unit 170, and controls the overall operations of the TV 100 according to the analyzed user command.

More specifically, in accordance with the input of the user operation unit 170, the controlling unit 160 generates a plurality of channel lists aligned according to each alignment standard. Herein, when generating the plurality of channel lists, the controlling unit 160 uses tag information which is transmitted together with the broadcast program from the broadcasting station or tag information input directly by the user.

In particular, the channel lists include at least one channel information of channel number, channel name, thumbnail image, program title and program broadcasting time. Herein, a thumbnail image refers to the scene which is currently being broadcasted on the corresponding channel, and the thumbnail image can be updated at certain time intervals.

Furthermore, the alignment standard of the channel lists may be one of channel number, genre, recently viewed order, preference, channel name, broadcasting time zone, caption language, source resolution, program rating, reservation information and tag information.

More specifically, when the alignment standard of the channel list is channel number, the controlling unit 160 may align one channel list of the plurality of channel lists with a channel zone of particular numbers such as from channel 1 to channel 30. Furthermore, when the alignment standard of the channel list is genre, the controlling unit 160 may align one channel list of the plurality of channel lists with a channel zone of particular genres such as drama, sports, news, or music broadcasting. In addition, when the alignment standard of the channel list is the recently viewed order, the controlling unit 160 may align one channel list of the plurality of channel lists in the recently viewed order. Furthermore, when the alignment standard of the channel lists is preference, the controlling unit 160 may align one channel list of the plurality of channel lists according to the order of preference designated by the user. In addition, when the alignment standard of the channel list is channel name, the controlling unit 160 may align one channel list of the plurality of channel lists in the order of channel name, that is broadcasting stations. In addition, when the alignment standard of the channel lists is broadcasting time zone, the controlling unit 160 may align one channel list of the plurality of channel lists according to programs broadcasted at particular broadcasting time zones, or time period, (for example, 8∼9 pm). Furthermore, when the alignment standard of the channel lists is caption language, the controlling unit 160 may align one channel list of the plurality of channel lists as the channels which support only a particular caption language(for example, English and Spanish etc.). In addition, when the alignment standard of the channel lists is program ratings, the controlling unit 160 may align one channel list of the plurality of channel lists as channels having a particular program rating (for example, 12 ratings and 19 ratings etc.). In addition, when the alignment standard of the channel lists is reservation information, the controlling unit 160 may align one channel list of the plurality of channel lists as channels for which reserved recording and reserved viewing have been designated. Furthermore, when the alignment standard of the channel lists is tag information, the controlling unit 160 may align one channel list of the plurality of channel lists to include only the channels including arbitrary tag information designated by the user.

As aforementioned, the plurality of channel lists are aligned by each alignment standard. Herein, the alignment standard of the plurality of channel lists may differ per each channel list, or at least two channel lists of the plurality of channel lists may have the same alignment standard.

Especially, when two channel lists of the plurality of channel lists have the same alignment standard, the plurality of channel lists having the same alignment standard may have a channel search section divided according to the channel number, or the channel search starting point may differ from each other.

In addition, the controlling unit 160 may edit the plurality of channel lists by the operation command of the user operation unit 170. That is, the controlling unit 160 may control so as to change the location of the channel lists, delete the channel lists, insert a new channel list, change the form of the channel lists, and change the alignment standard of the channel lists.

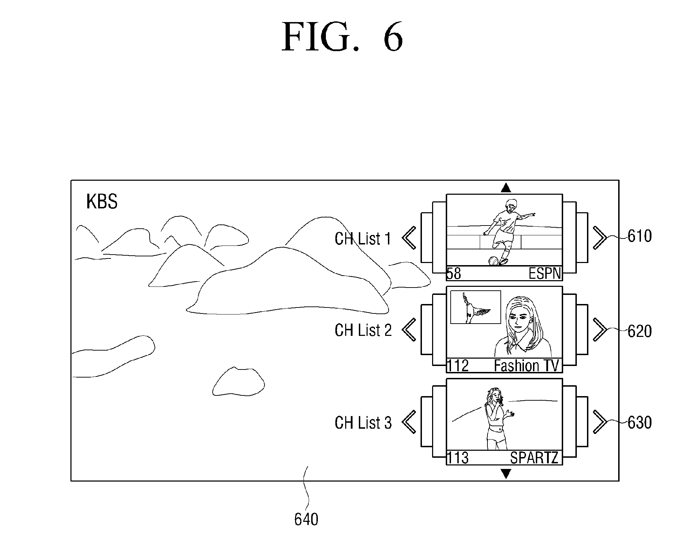

More specifically, the controlling unit 160 may change the location of the plurality of the channel lists. For example, in the case where a first channel list, a second channel list, a third channel list, and a fourth channel list are displayed consecutively, the controlling unit 160 may control the GUI generating unit 140 so that the order of the first to fourth channel lists is changed in the order of the second channel list, the third channel list, the fourth channel list, and the first channel list consecutively. Herein, it is possible to change the order of all the plurality of channel lists, and it is also possible to fix the order of some of the channel lists of the plurality of channel lists while changing the order of the rest of the channel lists. In addition, the controlling unit 160 may delete one of the existing channel lists and insert a new channel list. For example, in the case where the first channel list, the second channel list, the third channel list, and the fourth channel list are displayed, the controlling unit 160 may delete the first channel list and generate a new fifth channel list. In addition, the controlling unit 160 may control so that the form of the channel list is changed. For example, as illustrated in FIG. 3, in the case where the plurality of channel lists are aligned in a vertical direction, the controlling unit 160 may change the GUI so that the plurality of channel lists are aligned in a horizontal direction, as illustrated in FIG. 6. In addition, the controlling unit 160 may control the GUI so that the alignment standard of the channel list is changed. For example, in the case where the channel lists are aligned by the channel name standard, the controlling unit 160 may change the alignment standard of the channel lists to genre by an operation command of the user operation unit 170.

As aforementioned, by providing editing of the channel lists, the user may compare and select the plurality of channels more easily.

In addition, the controlling unit 160 may control the display unit 145 so that the aforementioned plurality of channel lists are overlapped and displayed in the state where the image which is currently viewed is displayed.

In addition, if a particular channel of one channel list of the plurality of channel lists is selected through the user operation unit 170, the controlling unit 160 controls the display unit 145 so that the particular channel is selected and displayed.

As aforementioned, through the plurality of channel lists aligned by each alignment standard, the user becomes able to easily compare, or "surf," various channels that the user wishes to view.

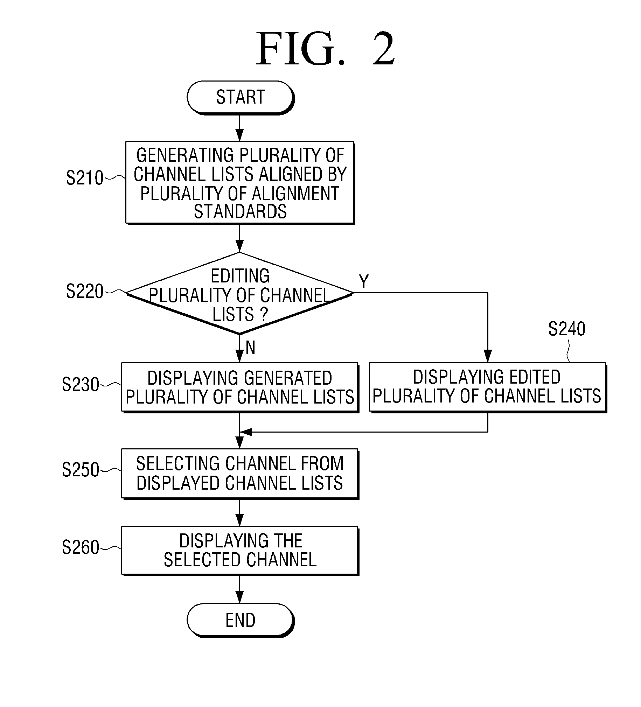

Hereinafter, the method for providing channel lists of the TV 100 will be explained with reference to FIG. 2.

FIG. 2 is a flow chart which is provided to explain the method for providing the channel lists according to an exemplary embodiment of the present disclosure.

By the user operation command, the TV 100 generates the plurality of channel lists aligned by a plurality of alignment standards (S21 0). That is, each channel list is aligned by one or more of the alignment standards. In the channel lists generated by this process, at least one channel information of channel name, thumbnail image, program title, and program broadcasting time are included.

In addition, the alignment standard of the channel lists may be one of channel number, recently viewed order, preference, channel name, broadcasting time zone, caption language, source resolution, program rating, reservation information, and tag information.

Herein, the TV 100 determines whether or not there was an edit command on the plurality of channel lists by the user operation command (S220). More specifically, the TV 100 determines whether or not to change the location of the channel lists, delete the existing channel lists, insert a new channel list, change the form of the channel list, and change the alignment standard of the channel list.

If there was an edit on the plurality of channel lists by the user operation command (S220-Y), the TV 100 displays the edited plurality of channel lists (S240).

However, if there was not an edit on the plurality of channel lists (S220-N), the TV 100 displays the generated plurality of channel lists (S230).

By the user operation command, the TV 100 selects a particular channel from among the plurality of channel lists displayed by the S230 process or the S240 process (S250).

When a particular channel is selected, the TV 100 seeks the selected particular channel and displays the selected channel (S260).

By the aforementioned method for providing the channel lists, the TV 100 provides the plurality of channel lists aligned by each alignment standard so that the user can easily compare various channels that they wish to view.

Hereinbelow, the exemplary embodiments on the plurality of channel lists provided by the display apparatus are explained in greater detail with reference to FIGS. 3 to 7b.

FIG. 3 illustrates the screen having the plurality of channel lists according to an exemplary embodiment of the present disclosure.

On the screen, the first channel list 310, the second channel list 320, the third channel list 330, and the fourth channel list 340 are displayed.

Herein, each channel list 310, 320, 330, 340 is displayed as the scroll list which includes the channel information display area 315 and the channel images 311, 313, 317, 319, 321 aligned by the channel information display area 315. Herein, the entire channel image and the channel information display area of the highlighted channel, including the channel number, and the channel name of the highlighted channel, are displayed. Besides, channel information such as the program title and the program broadcasting time may be included.

Herein, the size of the non-highlighted channel images 311, 313, 317, 319 may become smaller in proportion to the distance from the highlighted channel, such as the channel information display area. That is, the channel images 313, 317 of which the distances are close to the channel information display area 315 may have bigger sizes than the channel images 311, 319 of which the distances are far from the channel information display area 315.

In addition, as illustrated in FIG. 3, the channel images 311, 313, 317, 319 overlap with each other and with the channel information display area 315, and thus only a portion of the channel images of the non-highlighted channels are displayed. However, the channel images 313, 317 adjacent to the highlighted channel 315, 321 may not overlap with other images and the entire channel images of at least one of the non-highlighted channels may be displayed.

In addition, the first channel list 310 may be scrolled according to user selection, and the channel information corresponding to the previous or the next channel image on the channel information display area may be displayed. For example, in the case where the user operation unit 170 is a touch panel, the channel information of the channel corresponding to the channel image 313 may be displayed on the channel information area 315 by dragging a finger upwards or touching the channel image 313. That is, dragging the finger or touching the channel image 313 may change from highlighting the channel having the channel image 321 to the channel having the channel image 313. In addition, in the case where the user operation unit 170 is a remote control, the channel information of the channel corresponding to the channel image 313 may be displayed on the channel information area 315 by selecting an up arrow (A) button.

In addition, in the case where the user wishes to search the second channel list 320 after searching the first channel list 310, it is possible to start the channel search on the second channel list 320 by selecting a right arrow (► ) button. The search methods for the third channel list 330 and the fourth channel list 340 are similar to the above-described search methods. Herein, the channel list selected for search may be highlighted and displayed.

In addition, the first to fourth channel lists 310, 320, 330, 340 may be aligned by each alignment standard. For example, the first channel list 310 may be aligned having drama as the alignment standard, the second channel list 320 may be aligned having sports as the alignment standard, the third channel list 330 may be aligned having news as the alignment standard, and the fourth channel list 340 may be aligned having music broadcast as the alignment standard. That is, each channel list may be aligned by different alignment standards and be displayed.

Herein, even if the channel lists are aligned by different alignment standards, a same channel may be aligned in the plurality of channel lists. For example, in the case where the alignment standard of the first channel list 310 is channel name, and the alignment standard of the second channel list 320 is drama, a channel such as KBS drama may be included in the first channel list 310 and also in the second channel list 320.

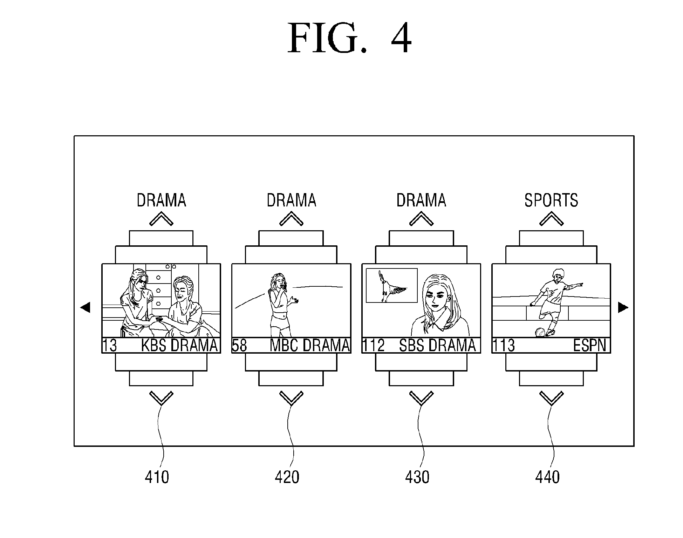

In addition, each channel list may not only be aligned by different alignment standards, but at least two channel lists of the plurality of channel lists may be aligned by the same alignment standard. Explanation on the channel lists aligned by the same alignment standard will be made with reference to FIGS. 4 to 5B.

FIG. 4 illustrates the screen having the plurality of channel lists aligned by the same alignment standard according to an exemplary embodiment of the present disclosure.

As illustrated in FIG. 4, on the screen, the first channel list 410, the second channel list 420, the third channel list 430, and the fourth channel list 440 are displayed.

Herein, the first channel list 410, the second channel list 420, and the third channel list 430 are lists aligned by the same alignment standard which is drama. And the fourth channel list 440 is a list aligned having sports as the alignment standard.

Therefore, the user fixes a thumbnail image of a first drama on the first channel list 410, a thumbnail image of a second drama on the second channel list 420, a thumbnail image of a third drama on the third channel list 430, and compares the first to third dramas, becoming able to select the drama that the user wishes to view. That is, the user highlights different dramas in each of the first through third channel lists to compare the three highlighted dramas.

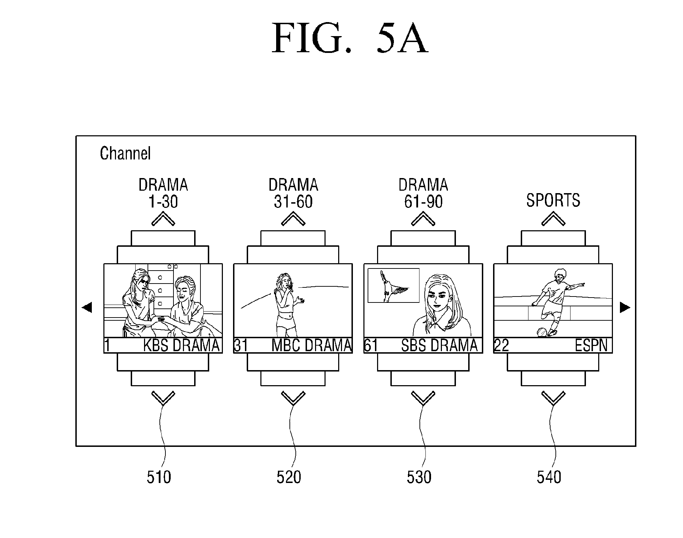

FIGS. 5A to 5B illustrate the screen having the plurality of channel lists aligned according to another exemplary embodiment of the present disclosure.

FIG. 5A illustrates a plurality of channel lists aligned by the same alignment standard, wherein the search section on each channel list is divided in order to quickly search the plurality of channel lists aligned by the same alignment standard.

That is, in the first channel list 510, drama channels from channel 1 to channel 30 are aligned by the alignment standard; in the second channel list 520, drama channels from channel 31 to channel 60 are aligned by the alignment standard; in the third channel list 530, drama channels from channel 61 to channel 90 are aligned by the alignment standard. The fourth channel list 540 is aligned by the alignment standard of the sports genre.

Therefore, the user can search a shorter search section and quickly search the broadcasting program that the user wishes to view.

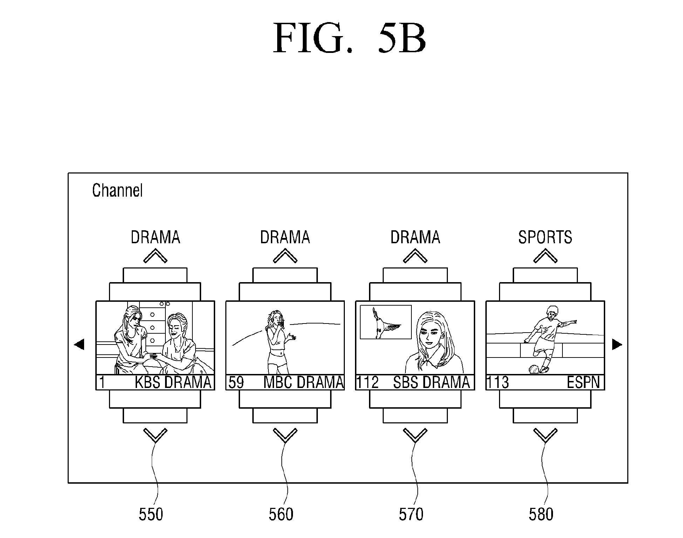

FIG. 5B illustrates a plurality of channel lists aligned by the same alignment standard, wherein the channel search starting point of each channel list is set differently in order to quickly search the plurality of channel lists aligned by the same alignment standard.

For example, in the first channel list 550, drama channels starting from channel 1 are aligned by the alignment standard; in the second channel list 560, drama channels starting from channel 59 are aligned by the alignment standard; in the third channel list 570, drama channels starting from channel 112 are aligned by the alignment standard. The fourth channel list 580 is aligned by the alignment standard of the sports genre.

Therefore, the user may search the channels by different channel search starting points and quickly search the broadcasting program that the user wishes to view.

FIG. 6 illustrates the plurality of channel lists which overlap the screen which is viewed and displayed thereon.

As illustrated in FIG. 6, the first channel list 610, the second channel list 620, and the third channel list 630 are displayed on the screen.

Herein, the first to third channel lists 610, 620, 630 are lists which are scrolled horizontally not vertically as illustrated in FIGS. 3 to 5B. The method for providing the channel list on FIG. 6 is the same as the method explained in FIGS. 3 to 5B.

During a time when the first to third channel lists 610, 620, 630 are displayed on the screen, the broadcast program 640 which the user is currently viewing is overlapped and displayed on the screen. That is, the first to third channel lists 610, 620, 630 overlay the currently viewed broadcast program 640.

Accordingly, the user becomes able to compare the broadcast program which the user is currently viewing 640 with broadcast programs of various other channels.

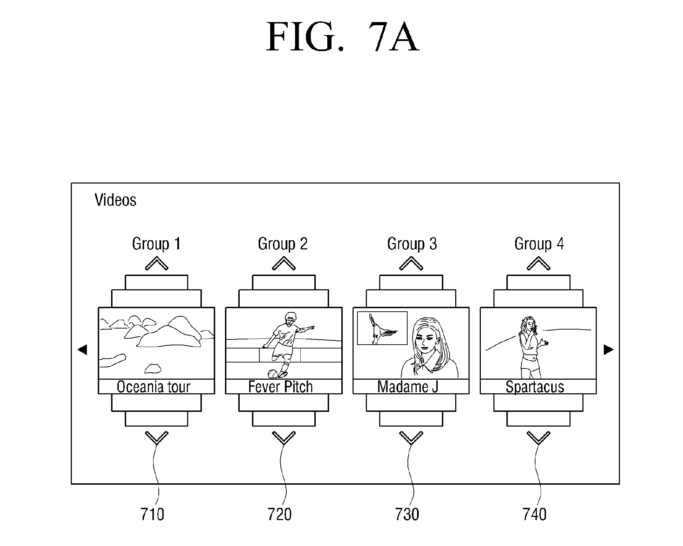

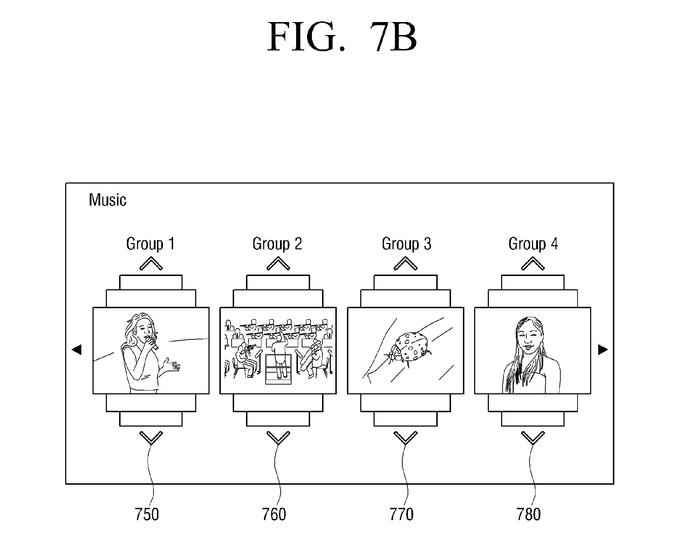

FIGS. 7A and 7B illustrate the screen having the plurality of contents lists according to an exemplary embodiment.

As display apparatuses develop, they became capable of storing various contents in the storage unit 150 and executing the stored contents. Therefore, in order to compare and provide the various contents, a TV can provide contents lists as according to the method for providing channel lists according to the exemplary embodiments.

As illustrated in FIG. 7A, the display apparatus may provide a plurality of contents lists aligned by a particular alignment standard of the video contents. In addition, as illustrated in FIG. 7B, the display apparatus may provide a plurality of contents lists aligned by a particular alignment standard of the audio contents.

Therefore, the user becomes able to compare the plurality of contents and execute the contents using the contents lists aligned by the various alignment standard generated in the display apparatus.

Hereinabove, the display apparatus was a TV 100, but this is merely exemplary, and the technological concept of the exemplary embodiments may be applied to other display apparatuses as well. For example, a display apparatus may be a projection, a monitor, a digital multimedia broadcasting (DMB) device, or a portable media played (PMP).

According to various exemplary embodiments, the user becomes able to easily compare various channels that the user wishes to view through the plurality of channel lists aligned by each alignment standard, providing convenience for the user in selecting TV programs.

Although a few exemplary embodiments have been shown and described, it would be appreciated by those skilled in the art that changes may be made without departing from the principles and spirit of the inventive concept, the scope of which is defined in the claims and their equivalents.

## Claims

1. A method for providing a plurality of channel lists, comprising:
generating the plurality of channel lists aligned by a plurality of alignment standards, the plurality of channel lists comprising a plurality of channels;
displaying the plurality of channel lists on a screen; and
when one of the plurality of channels is selected from one channel list of the plurality of channel lists, displaying the selected channel.

2. The method for providing channel list according to claim 1, wherein the plurality of channel lists comprise at least one of a channel number, a channel name, a thumbnail image, a program title and a program broadcasting time, of the plurality of channels.

3. The method for providing channel list according to claim 1 or claim 2, wherein the alignment standard is at least one of a channel number, a genre, a recently viewed order, a preference, a channel name, a broadcasting time, a caption language, a source resolution, a program rating, a reservation information and a tag information.

4. The method for providing channel list according to any one of claims 1 to 3, further comprising editing the plurality of channel lists that are displayed;
wherein the editing comprises at least one of changing a location of at least one of the plurality of channel lists, deleting at least one of the plurality of channel lists, inserting a new channel list, changing a form of the plurality of channel lists, and changing the alignment standard of the plurality of channel lists.

5. The method for providing channel list according to any one of claims 1 to 4, wherein at least one of the plurality of the channel lists is displayed as a scroll list comprising a channel information display area and a plurality of channel images, the channel information display area displaying channel information of a highlighted one of the plurality of channels of the one channel list,
the scroll list is scrollable according to a user selection, wherein the information display area displays channel information corresponding to a previous or a next channel of the plurality of channels of the one channel list according to the user selection, and
sizes of the plurality of channel images become smaller in proportion to a distance from the channel information display area.

6. The method for providing channel list according to any one of claims 1 to 5, wherein a same channel is included in at least two channel lists of the plurality of channel lists.

7. The method for providing channel list according to any one of claims 1 to 6, wherein the at least two channel lists of the plurality of channel lists are aligned by the same alignment standard.

8. The method for providing channel list according to claim 7, wherein the at least two channel lists aligned by the same alignment standard have divided channel search sections.

9. The method for providing channel list according to claim 7, wherein the at least two channel lists aligned by the same alignment standard have different channel search starting points.

10. The method for providing channel list according to any one of claims 1 to 9, wherein the displaying the plurality of channel lists overlay the plurality of channel lists on an image of a currently viewed channel from among the plurality of channels.

11. A display apparatus comprising:
a display unit; and
a controlling unit which generates a plurality of channel lists aligned by a plurality of alignment standards, the plurality of channel lists comprising a plurality of channels,
wherein the controlling unit displays the plurality of channel lists through the display unit, and when one of the plurality of channels is selected from one channel list of the plurality of channel lists displays the selected channel.

12. The display apparatus according to claim 11, wherein the plurality of channel lists comprise at least one of a channel number, a channel name, a thumbnail image, a program title and a program broadcasting time, of the plurality of channels.

13. The display apparatus according to claim 11 or claim 12, wherein the alignment standard is one of a channel number, a genre, a recently viewed order, a preference, a channel name, a broadcasting time zone, a caption language, a source resolution, a program rating, a reservation information and a tag information, of the plurality of channels.

14. The display apparatus according to any one of claims 11 to 13, wherein the controlling unit controls to change a location of the plurality of channel lists, delete at least one of the plurality of channel lists, insert a new channel list, change a form of the plurality of channel lists, and change the alignment standard of the plurality of channel lists.

15. The display apparatus according to any one of claims 11 to 14, wherein at least one of the plurality of channel lists is displayed as a scroll list comprising a channel information display area and a plurality of channel images, the channel information display area displaying channel information of a highlighted one of the plurality of channels of the one channel list,
the scroll list is scrollable according to a user selection, wherein the information display area displays channel information corresponding to a previous or a next channel of the plurality of channels of the one channel list according to the user selection, and
sizes of the plurality of channel images become smaller in proportion to a distance from the channel information display area.
